# EUROPEAN PATENT APPLICATION

(11) **EP 4 617 614 A1**
(43) Date of publication of application: **17.09.2025**
(21) Application number: 25157890.2
(22) Date of filing: 14.02.2025
(51) Int. Cl.: F41C 27/00, F41G 1/34, F41G 1/30, F41G 1/38

(54) **RISER ASSEMBLY WITH INTEGRAL POWER SUPPLY AND WEAPON SYSTEM EMPLOYING THE SAME**

(30) Priority: 10.03.2024 US 202463563395 P
(71) Applicant: Wilcox Industries Corp., Newington, NH 03801 (US)
(72) Inventor: TEETZEL, James W., Newington, 03801 (US); BEAULIEU, Joshua R., Newington, 03801 (US)
(74) Representative: FRKelly

(57) **Abstract**

A riser mount system includes a housing having a lower surface configured to engage a weapon accessory interface and an upper surface opposite the lower surface configured to engage a fire control system. A peripheral wall extending between the lower surface and the upper surface, wherein the housing defines an interior compartment. A riser circuit assembly disposed with the interior compartment, which is configured to receive one or more batteries for electrical coupling to the riser circuit assembly. A first electrical connector is disposed on the first surface and is structured and operable to electrically couple the one or more batteries to a fire control system. A second electrical connector is disposed on the second surface and is structured and operable to electrically couple the one or more batteries to one or more devices on the weapon accessory interface.

## Description

### CROSS REFERENCE TO RELATED APPLICATION

This application claims the priority benefit of U.S. provisional application no. 63/563,395 filed March 10, 2024. The aforementioned application is incorporated herein by reference in its entirety.

### INCORPORATION BY REFERENCE

This application is related to U.S. provisional application no. 63/538,265 filed September 13, 2023, and U.S. nonprovisional application no. 18/830,125 filed September 10, 2024. Each of the aforementioned applications is incorporated herein by reference in its entirety.

### BACKGROUND

The present invention relates to weapon systems and, in particular, to a weapon system including a riser assembly attachable to a weapon accessory interface for mounting a fire control system.

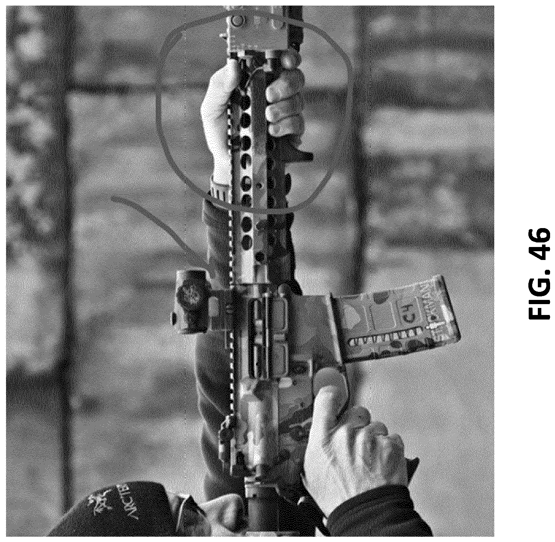

As shown in FIG. 46, there is shown a weapon operator holding a rifle using a conventional "C grip," C-clamp grip," or "thumb-over grip," which can be utilized for certain shooting techniques and tactical scenarios, or, as a matter of individual preference. In this context, the shooter typically holds the rifle with one hand on the pistol grip, as usual, and the other, support hand is positioned toward the fore-end of the rifle with the thumb positioned over the top of the handguard. While this grip provides good control and stability of the rifle, particularly during rapid or sustained fire, positioning the support hand over the top of the handguard and at the fore-end of the rifle can potentially block scopes, sights, or other aiming devices mounted on the accessory interface, thereby obstructing the operator's sight picture through the aiming device.

A riser is an accessory that attaches to a weapon accessory mounting platform and raises the mounting point of the aiming accessory device. Elevating the aiming device above the handguard creates additional clearance for the support hand, allowing the operator to utilize the C-grip without obstructing the line of sight through the aiming device or, in the case of a laser sight, without blocking beam emitted by the aiming laser.

The present invention contemplates an improved riser assembly with power supply which utilizes the space beneath the riser, which would normally be wasted or unused space, wherein the riser houses one or more batteries while elevating an aiming accessory to accommodate a C grip or thumb-over shooting technique.

### SUMMARY

The present disclosure provides a riser assembly including one or more batteries which power the fire control system. Circuitry within the riser assembly provides power to the fire control system and other accessories. In embodiments, the circuitry within the riser assembly also transmits data and control signals from the fire control system to one or more associated devices and vice versa. In this manner, the fire control system can be used to activate and control accessories mounted on the weapon handguard and accessories on the weapon handguard can be used to activate and control the fire control system. In embodiments, data can be transmitted between the fire control system and one or more associated accessory devices.

In a further aspect, a modular keypad assembly with an integral illuminator is attachable to the weapon accessory interface and is also powered by the batteries within the riser assembly. In certain embodiments, the modular keypad assembly includes an integral camera. The keypad includes button or key input controls which can be used to control operation of the fire control system. Likewise, buttons or other input controls on the fire control system can be used to control operation of the illuminator and optional camera on the modular keypad assembly. In yet a further aspect, a flashlight assembly is attachable to the weapon accessory interface and is powered remotely by the one or more batteries in the riser assembly. Various advantages and benefits of the present invention will become apparent to those of ordinary skill in the art upon reading and understanding the following detailed description of the preferred embodiments.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of a firearm embodying the weapon system in accordance with an exemplary embodiment, taken generally from the front, above, and the shooter's right side.
FIG. 2 is an isometric view of the firearm and weapon system appearing in FIG. 1 taken generally from the front, above, and the shooter's left side.
FIG. 3 is a right side view of the firearm and weapon system appearing in FIG. 1.
FIG. 4 is a left side view of the firearm and weapon system appearing in FIG. 1.
FIG. 5 is an isometric view of the firearm and weapon system appearing in FIG. 1 taken generally from the front, below, and the shooter's right side.
FIG. 6 is an isometric view of the firearm and weapon system appearing in FIG. 1 taken generally from the front, below, and the shooter's left side.
FIG. 7 is a front view of the firearm and weapon system appearing in FIG. 1.
FIG. 7A is a partially exploded isometric view of the firearm appearing in FIG. 1, illustrating the manner of attachment of a keypad assembly and an associated trim plate or interface cover.
FIG. 8 is an isometric view of an exemplary embodiment riser assembly taken generally from the front, above, and left.
FIG. 9 is a top view of the riser assembly appearing in FIG. 8.
FIG. 10 is an isometric view of the riser assembly appearing in FIG. 8, taken generally from the rear, above, and left.
FIG. 11 is a front view of the riser assembly appearing in FIG. 8.
FIG. 12 is a left side view of the riser assembly appearing in FIG. 8.
FIG. 13 is a rear view of the riser assembly appearing in FIG. 8.
FIG. 14 is an isometric view of the riser assembly appearing in FIG. 8, taken generally from the front, below, and left.
FIG. 15 is a bottom view of the riser assembly appearing in FIG. 8.
FIG. 16 is an isometric view of the riser assembly appearing in FIG. 8, taken generally from the rear, below, and left.
FIG. 17 is an exploded view of the weapon system appearing in FIG. 1.
FIG. 18 is an isometric view of an exemplary embodiment modular keypad assembly taken generally from the front, above, and right.
FIG. 19 is a top view of the modular keypad assembly appearing in FIG. 18.
FIG. 20 is an isometric view of the modular keypad assembly appearing in FIG. 18, taken generally from the front, above, and left.
FIG. 21 is a right side view of the modular keypad assembly appearing in FIG. 18.
FIG. 22 is a front view of the modular keypad assembly appearing in FIG. 18.
FIG. 23 is a left side view of the modular keypad assembly appearing in FIG. 18.
FIG. 24 is an isometric view of the modular keypad assembly appearing in FIG. 18, taken generally from the front, below, and right.
FIG. 25 is a bottom view of the modular keypad assembly appearing in FIG. 18.
FIG. 26 is an isometric view of the modular keypad assembly appearing in FIG. 18, taken generally from the front, below, and left.
FIG. 27 is an isometric view of a flashlight assembly in accordance with an exemplary embodiment, taken generally from above, the front, and right.
FIG. 28 is a top view of the riser assembly appearing in FIG. 27.
FIG. 29 is an isometric view of the riser assembly appearing in FIG. 27, taken generally from the front, above, and left.
FIG. 30 is a right side view of the riser assembly appearing in FIG. 27.
FIG. 31 is a front view of the riser assembly appearing in FIG. 27.
FIG. 32 is a left side view of the riser assembly appearing in FIG. 27.
FIG. 33 is an isometric view of the riser assembly appearing in FIG. 27, taken generally from the front, below, and right.
FIG. 34 is a bottom view of the riser assembly appearing in FIG. 27.
FIG. 35 is an isometric view of the riser assembly appearing in FIG. 27, taken generally from the front, below, and left.
FIG. 35A is a fragmentary isometric view of the muzzle end of the firearm appearing in FIG. 1 with the flashlight assembly attached and illustrating the manner of electrically connecting the flashlight assembly to the handguard circuit assembly.
FIGS. 35B and 35C are side and isometric views, respectively, of the flashlight assembly illustrating the manner of attachment to an accessory interface slot on the handguard assembly.
FIG. 36 is an isometric view of a second exemplary embodiment modular keypad assembly taken generally from the front, above, and right.
FIG. 37 is a top view of the modular keypad assembly appearing in FIG. 36.
FIG. 38 is an isometric view of the modular keypad assembly appearing in FIG. 36, taken generally from the front, above, and left.
FIG. 39 is a right side view of the modular keypad assembly appearing in FIG. 36.
FIG. 40 is a front view of the modular keypad assembly appearing in FIG. 36.
FIG. 41 is a left side view of the modular keypad assembly appearing in FIG. 36.
FIG. 42 is an isometric view of the modular keypad assembly appearing in FIG. 36, taken generally from the front, below, and right.
FIG. 43 is a bottom view of the modular keypad assembly appearing in FIG. 36.
FIG. 44 is an isometric view of the modular keypad assembly appearing in FIG. 36, taken generally from the front, below, and left.
FIG. 45 is a schematic block diagram illustrating the weapon system in accordance with the present disclosure.
FIG. 46 is an image illustrating the C-grip or thumb over grip being utilized for a rifle.

### DETAILED DESCRIPTION OF THE PREFERRED EMBODIMENT(S)

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

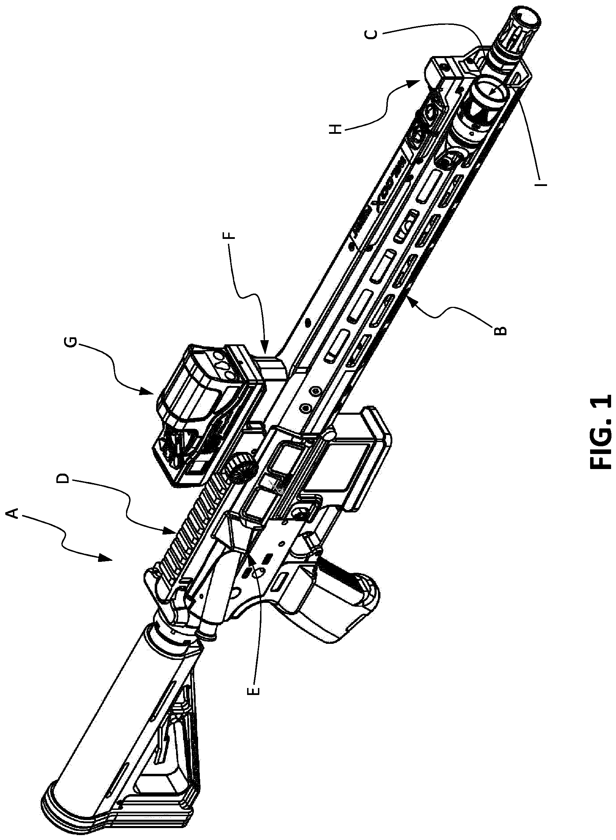

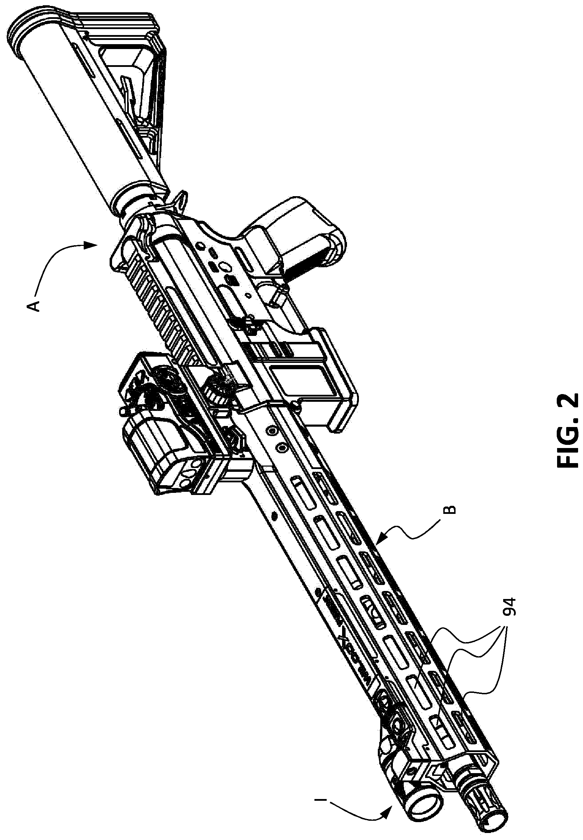

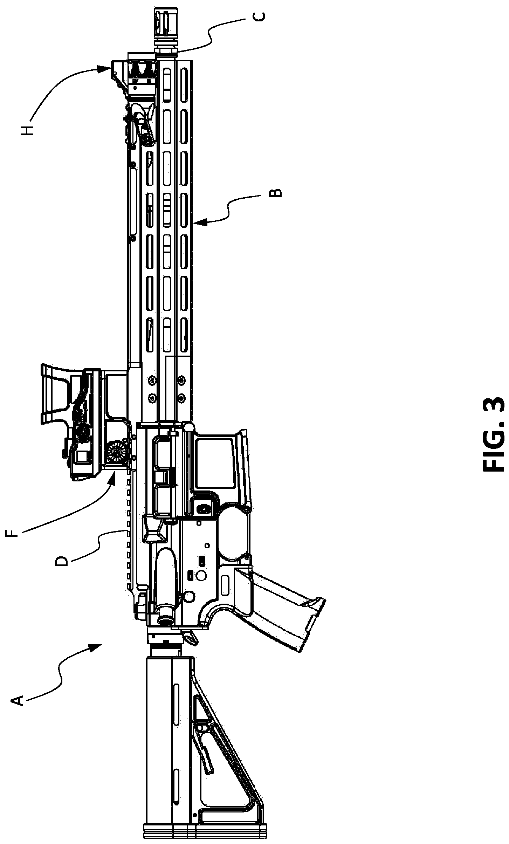

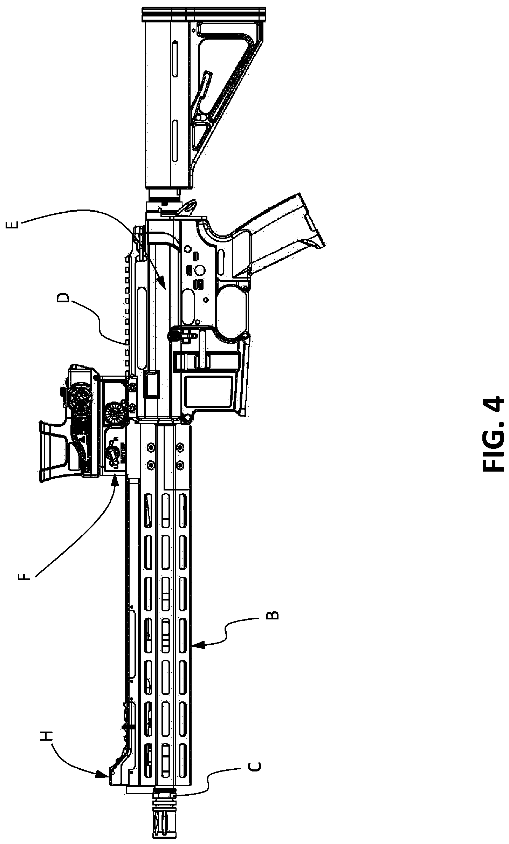

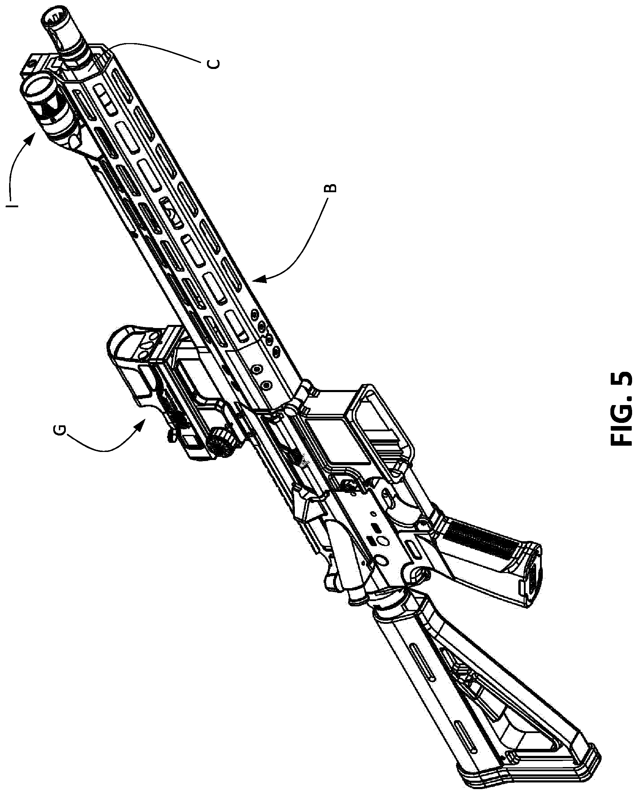

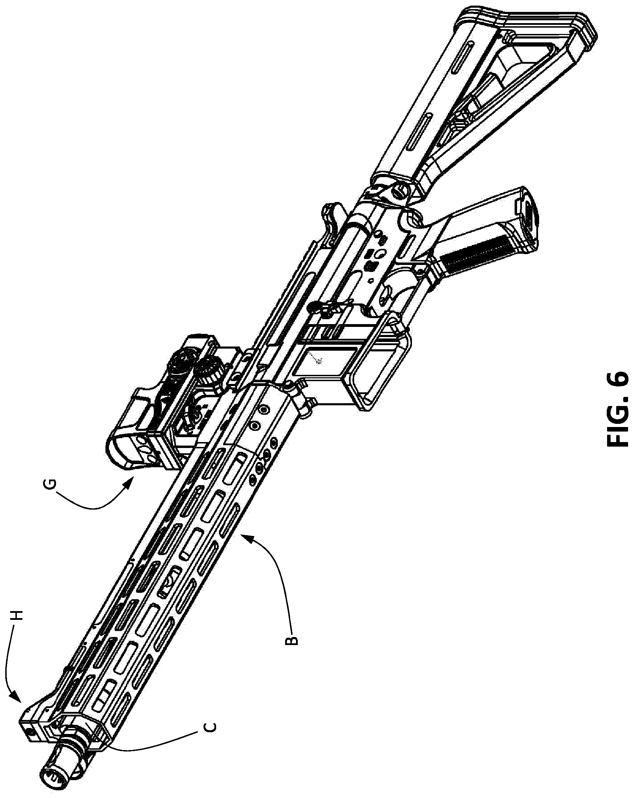

Referring now to the drawings, FIGS. 1-7A illustrate a weapon **A,** such as a firearm, having a handguard assembly **B** disposed about a barrel **C** of the firearm **A.** The handguard assembly **B** is both a protective and accessory-mounting component in that it shields the operator's hand from the hot barrel during use while also serving as a mounting platform for various accessories, such as grips, lights, lasers, and aiming devices. In embodiments, the weapon **A** also includes an accessory rail **D,** such as a Picatinny rail or the like, disposed on a receiver portion **E** of the firearm **A.** The handguard assembly **B** and the accessory rail **D** may also be referred to herein individually or collectively as a "weapon accessory interface."

A riser assembly **F** is secured to the weapon accessory interface, e.g., using threaded fasteners or the like. A fire control system **G,** in turn, is secured to the riser assembly **F.** As used herein, the term "fire control system" refers to systems that aid in aiming and firing weapons. Exemplary fire control systems include, but are not limited to, reflex sights, red dot sights, laser sights, holographic sights, night vision scopes, thermal imaging scopes, digital rifle scopes, and the like. In embodiments, the fire control system may be a fire control system in the Wilcox GSS, Wilcox RAAM GSS, Wilcox RAAM GSS M, Wilcox BOSS, and Wilcox BOSS Xe product lines, available from Wilcox Industries Corp. of Newington, New Hampshire.

A modular or remote keypad assembly **H** is disposed at the muzzle end of the handguard assembly **B.** A flashlight assembly **I** is secured to the handguard assembly **B** via a selected interface slot **94.** Although the flashlight assembly **I** is shown positioned at the top right position of the handguard assembly **B,** it can alternatively be positioned at any other desired position on the handguard assembly where an interface slot **94** is located.

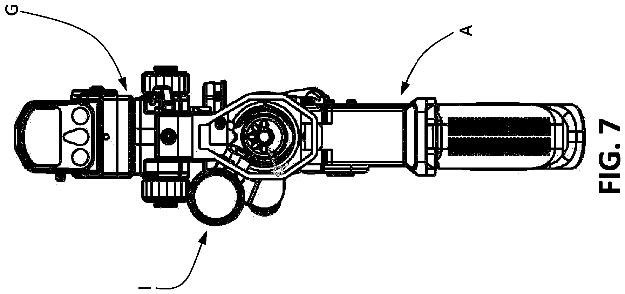

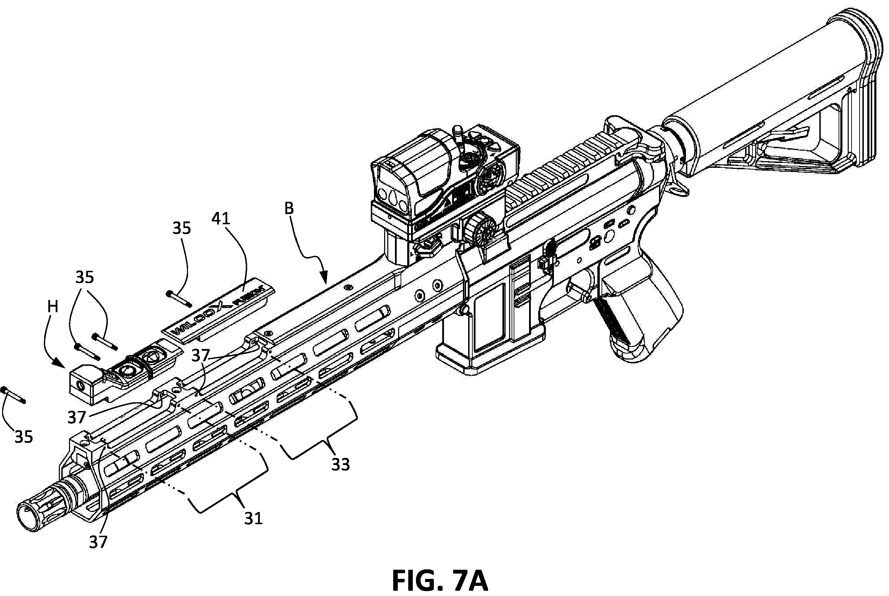

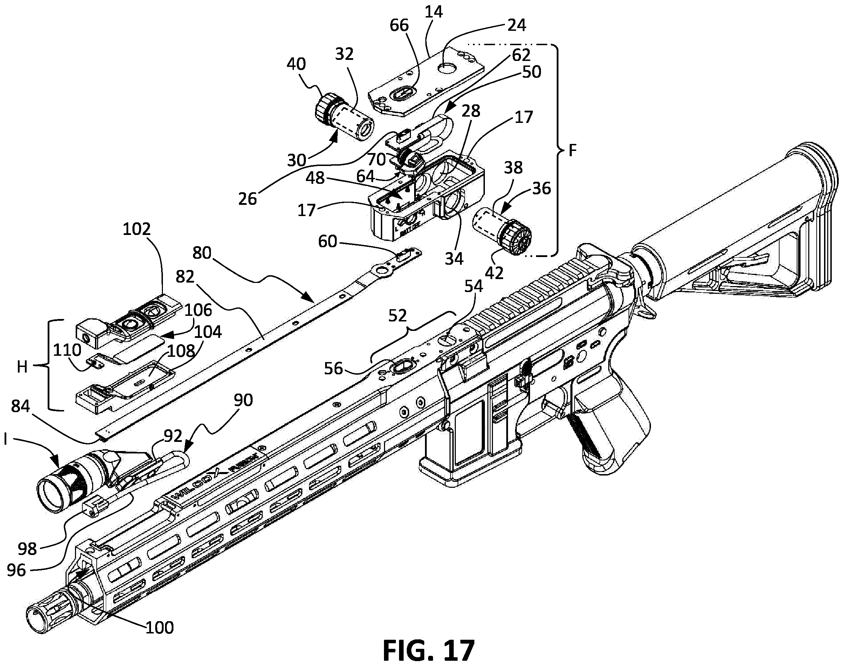

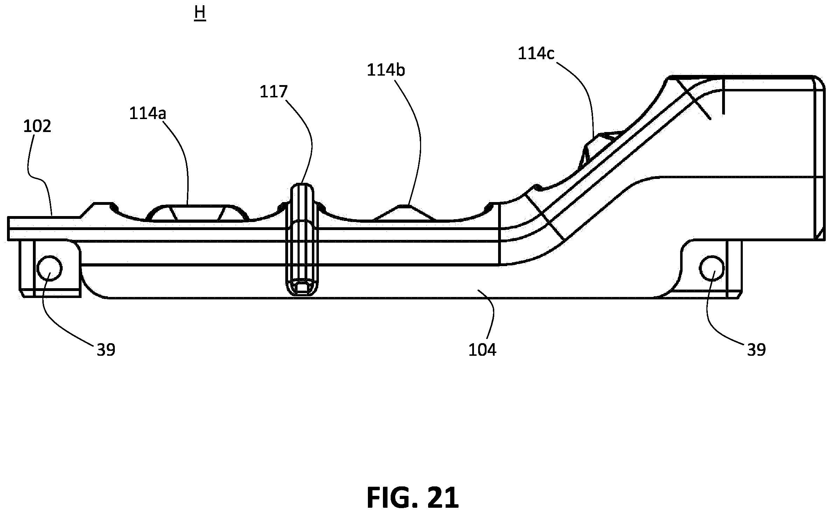

As best seen in FIG. 7A, in certain embodiments, the handguard assembly **B** includes a plurality of like fastening locations **31, 33** which include openings in the upper surface of the handguard assembly **B** to provide access to a handguard circuit assembly **80** (see FIG. 17) disposed within the handguard assembly **B.** In the illustrated embodiment, the keypad assembly **H** is secured to the first fastening location **31** via threaded fasteners **35** which engage aligned openings **37** in the handguard assembly **B** and pass through complementary transverse openings **39** (see FIG. 21) in the keypad assembly lower housing shell **104** (see FIG. 17). The second handguard assembly fastening location **33** includes a cover plate or trim plate **41** to cover the interface opening **33** when not in use. By providing two fastening locations **31, 33,** the keypad assembly **H** and cover plate **41** can swap places such that the keypad assembly **H** is secured at the fastening location **33** and the cover plate **41** is secured at the fastening location **31.** In this manner, the keypad assembly **H** can be positioned closer to the operator's body, e.g., to accommodate operators with shorter arms or otherwise according to their ergonomic preferences. It will be recognized that in alternative embodiments, a handguard assembly with a single keypad fastening location is also contemplated.

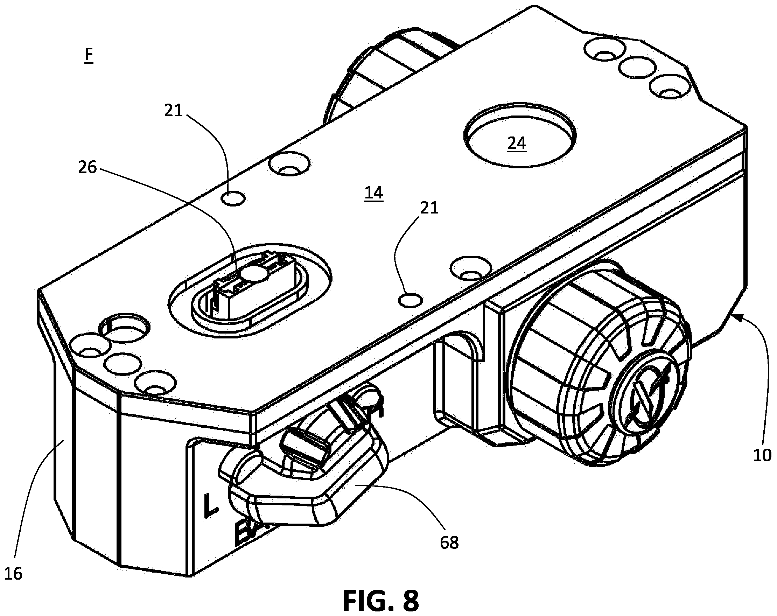

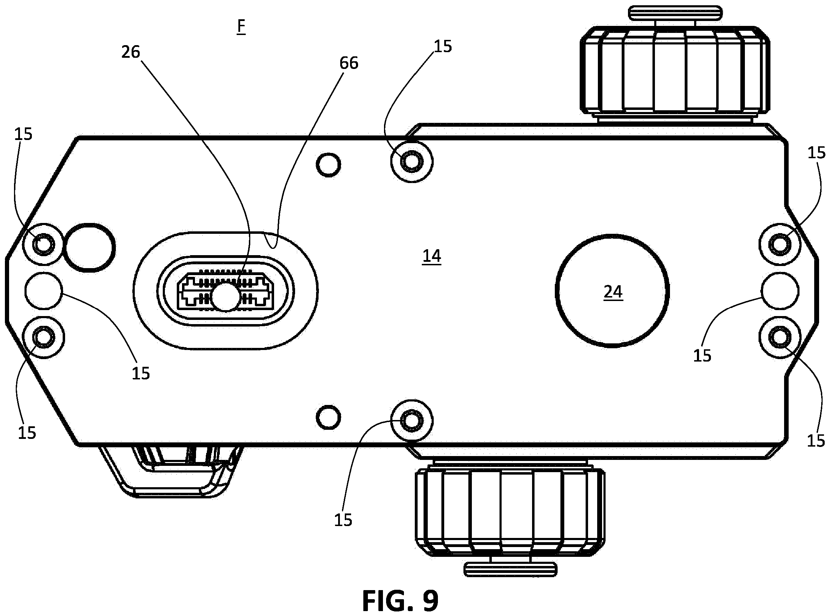

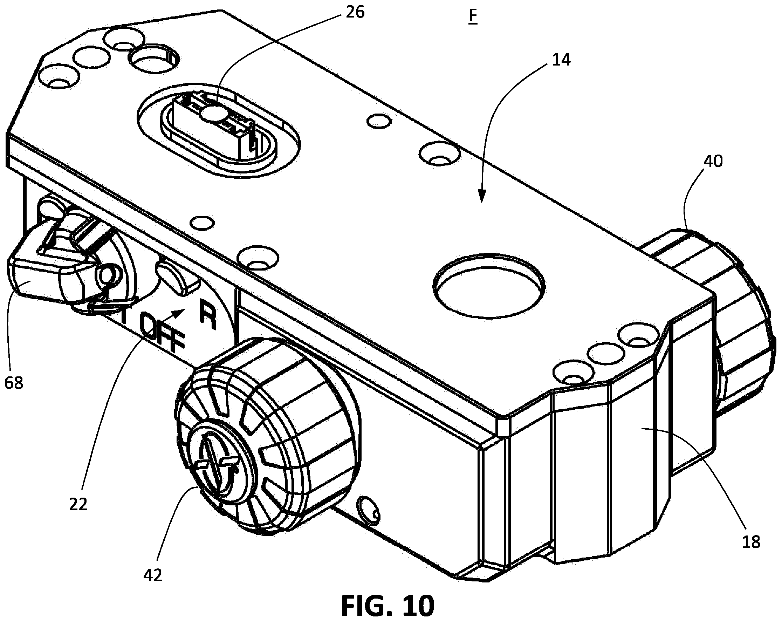

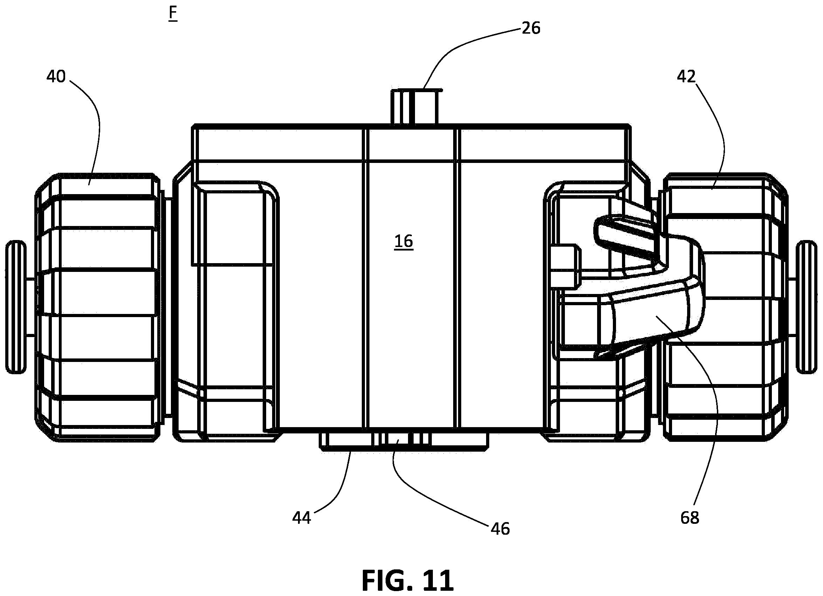

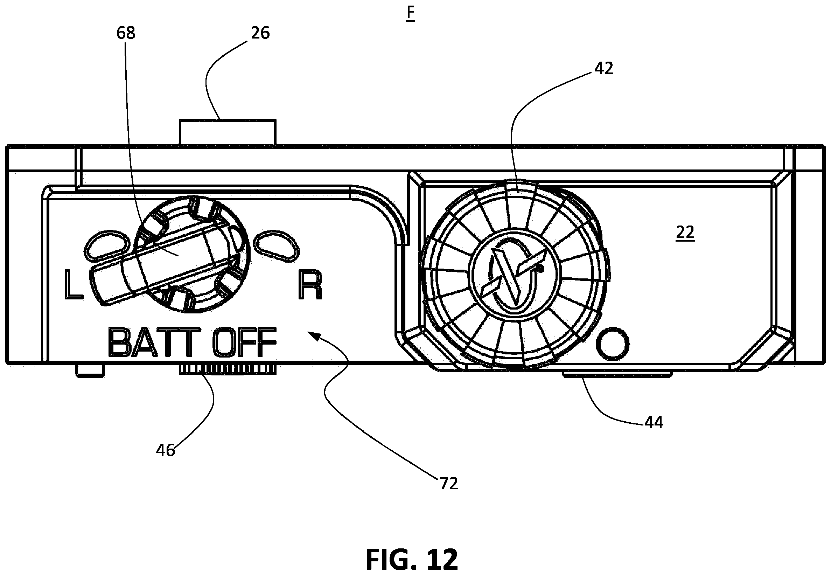

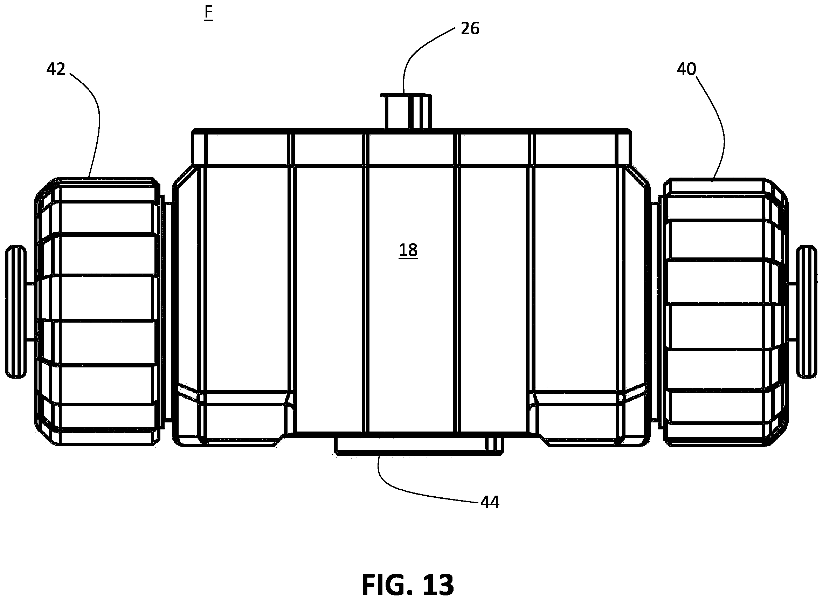

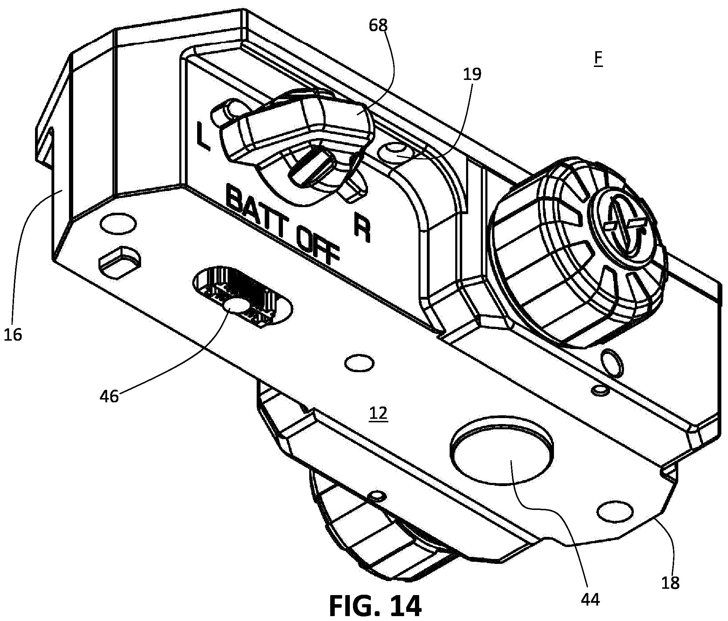

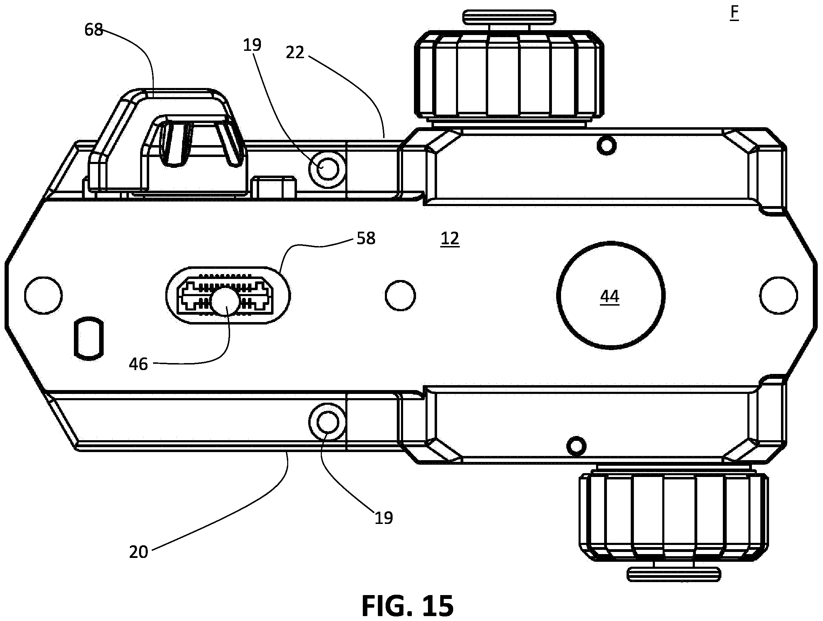

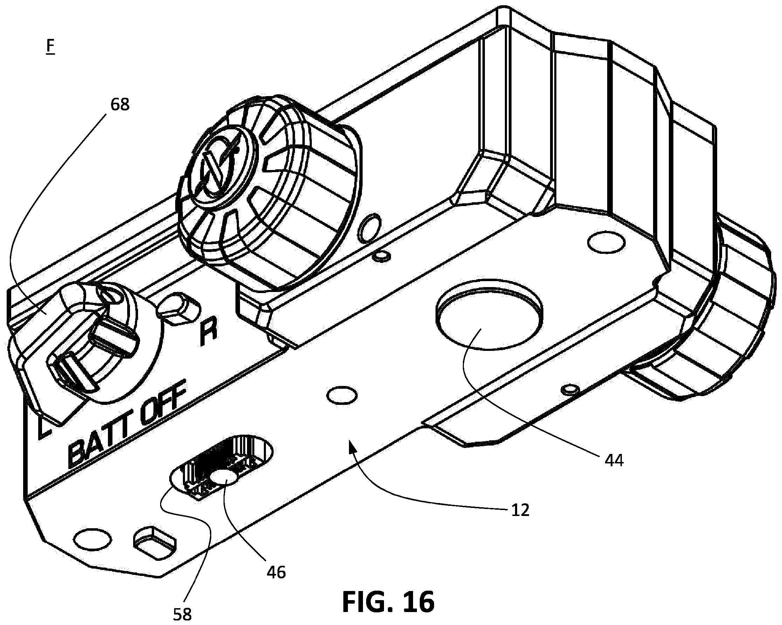

Referring now to FIGS. 8-16 , and with continued reference to FIGS. 1-7 and 7A, the riser assembly F includes a main housing 10, a lower surface 12, which interfaces with the weapon accessory interface, and an upper surface 14, which interfaces with the fire control system G. A front side 16, rear side 18, right side 20, left side 22 define a peripheral wall extending between the lower and upper surfaces 12, 14, respectively.

In the illustrated embodiment, the upper surface 14 includes a recess 24 and an electrical connector 26, which extends through an aperture 66 in the upper surface 14. In embodiments, the recess 24 engages with a complementary protrusion or boss (not shown) to ensure that the fire control system G is properly aligned when assembled to the riser assembly F and provides stability against movement or slippage under external forces or vibrations, such as recoil forces generated when the weapon **A** is fired. In the illustrated embodiment, the upper surface **14** is configured a cover plate secured to the peripheral wall via a plurality of threaded fasteners (not shown) engaging clearance openings **15** in the upper surface **14** and threadably engaging aligned openings **17** in the upstanding wall defined by the front side **16,** rear side **18,** right side **20,** and left side **22.** Threaded fasteners (not shown) engage clearance openings **19** in the side walls **20, 22** and threadably engage aligned openings **21** in the upper plate **14.**

The right housing side **20** includes an aperture **28** for receiving a right side battery tube **30,** which in turn houses a right battery **32.** The left housing side **22** includes an aperture **34** for receiving a left side battery tube **36,** which in turn housing a left battery **38.** Each of the battery tubes **30, 36** has a removable battery cap **40, 42,** respectively, to allow access to the batteries **32, 36** for removal and replacement when they run out of power.

In the illustrated embodiment, the lower surface **12** includes a protrusion **44** and an electrical connector **46.** The electrical connector is received within an aperture **58** disposed on the housing lower surface **12.** In embodiments, the lower surface **12** is configured as a removable plate covering an interior compartment **48** housing a riser circuit assembly **50.**

As best seen in FIG. 17, and with continued reference to FIGS. 1-7, 7A, and 8-16, the weapon accessory interface includes a riser mounting portion **52.** The surface of the riser mounting portion **52** engages the lower surface **12** of the riser main housing **10.** The riser mounting portion **52** includes a recess **54** which engages and is complementary in shape with the protrusion **44.** The interlocking nature of the recess **54** and protrusion **44** ensures that the riser assembly **F** is properly aligned when assembled to the weapon accessory interface and provides stability against movement or slippage under external forces or vibrations, such as recoil forces generated when the weapon **A** is fired.

The riser mounting portion **52** also includes an aperture **56** configured to accommodate an electrical connector **60.** The electrical connector is structured and operable to mate with the electrical connector **46** on the lower housing surface **12.**

The riser circuit assembly **50** includes a circuit substrate **62,** preferably a flexible circuit substrate, having the lower connector **46** and the upper connector **26** thereon. The riser circuit assembly **50** also includes a switch assembly **64.** The switch assembly **64** comprises an actuator knob **68** and a 3-position rotary switch **70.** The switch is operable to provide distinct electrical pathways corresponding to a left or "L" position which couples the riser circuit assembly **50** to the left battery **38;** a right or "R" position which couples the riser circuit assembly **50** to the right battery **32,** or a "battery off" position which disengages or isolates both power sources **32, 38** to prevent unintentional operation. In embodiments, markings or indicators **72** representative of the selected position are provided on the housing **10.**

In certain embodiments, the circuitry on the riser circuit assembly **50** includes one or more capacitors (not shown) for storing electrical energy to act as a temporary power supply for brief periods to ensure that power to the connector **26** is not interrupted when switching between the left and right batteries **38, 32.** This is particularly advantageous when an attached fire control system **F** is a processor-based device that requires a reboot after power is lost or cycled. In certain embodiments, each battery **32, 38** is individually swappable such that when one battery is depleted it can be changed without affecting the operation of the devices being powered by the other battery.

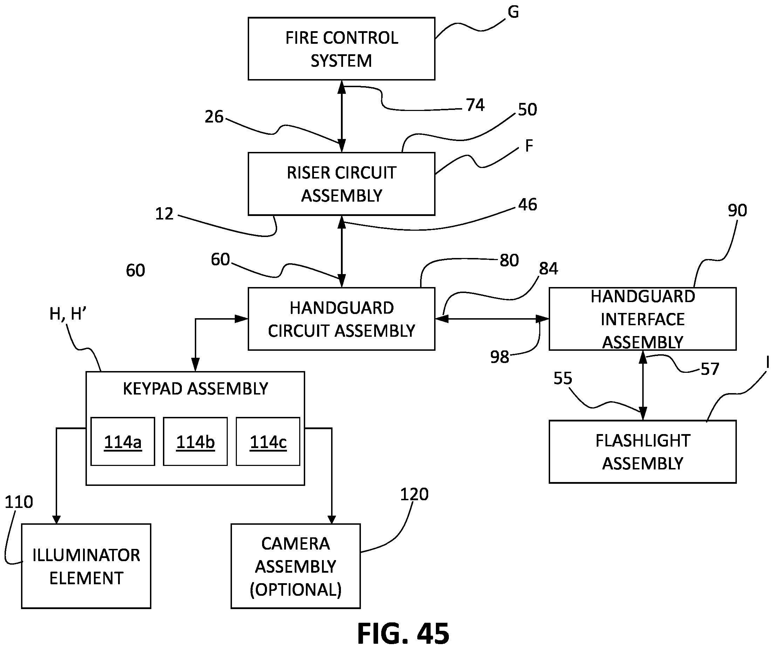

The fire control system **G** includes an electrical connector **74** (see FIG. 45) which mates with the electrical connector **26** on the riser assembly upper surface **14.**

The connector **60** is disposed on the handguard circuit assembly **80** including a circuit substrate **82.** In embodiments, the circuit substrate **82** is a flexible circuit substrate. The handguard circuit assembly **80** extends axially between the riser mounting portion **52** toward the muzzle end of the handguard assembly **B.** The handguard circuit assembly **80** extends within a passage withing the handguard assembly **B,** although is it illustrated exteriorly of the handguard in FIG. 17 for ease of exposition.

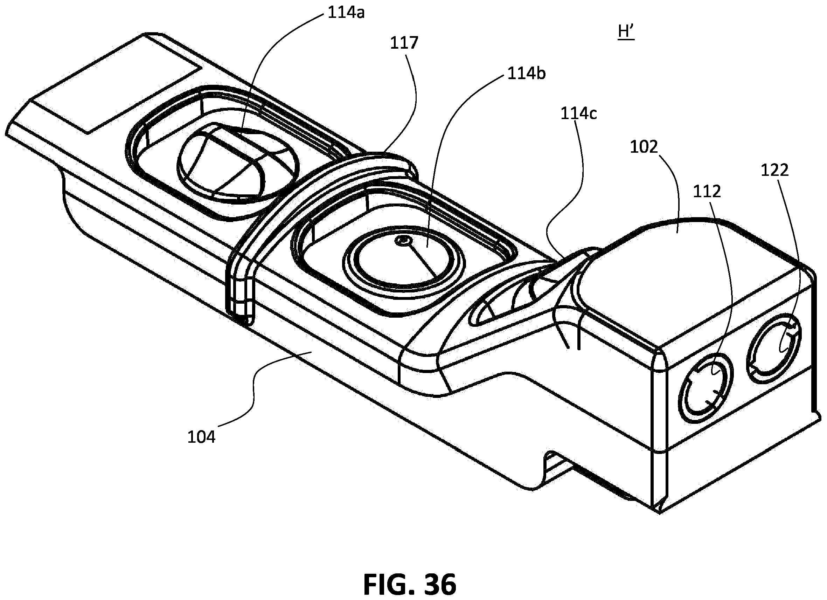

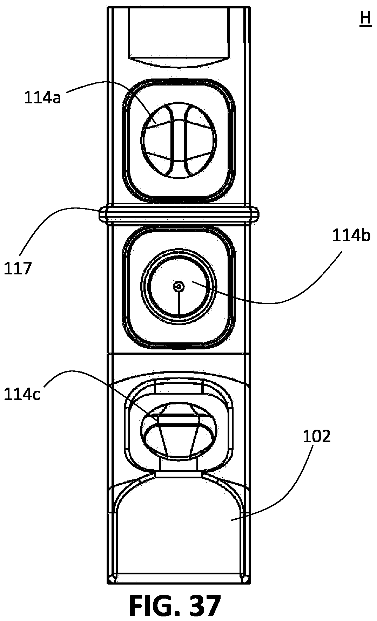

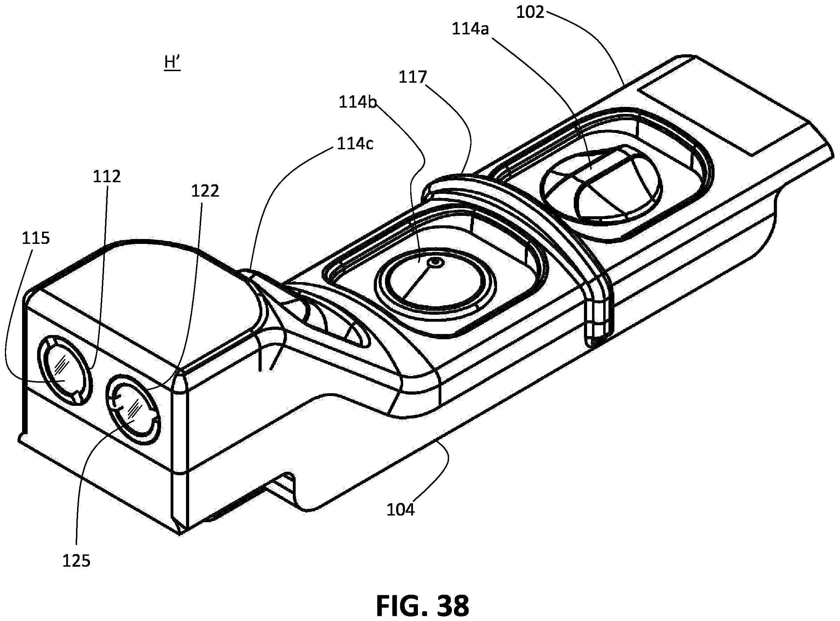

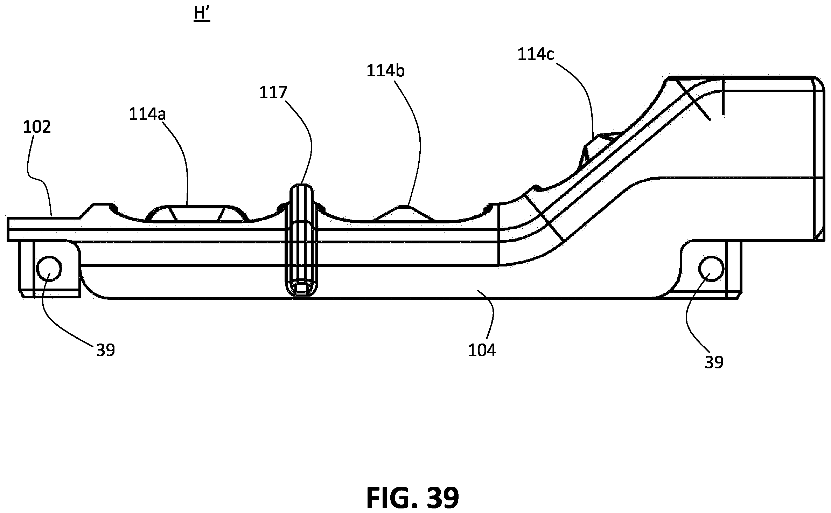

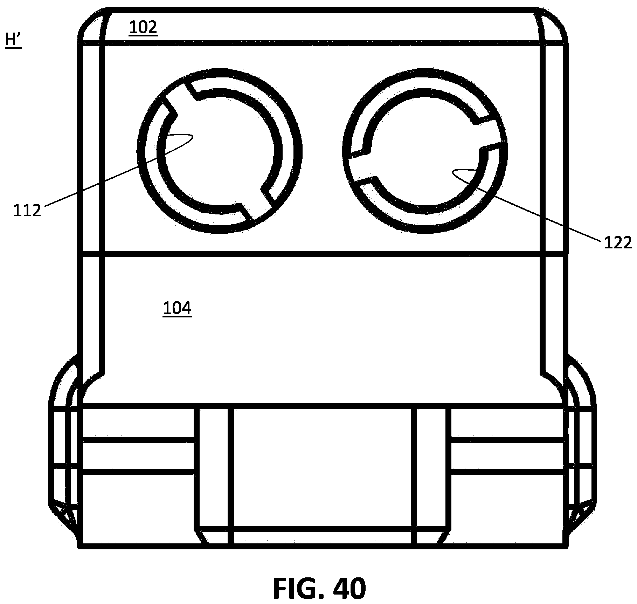

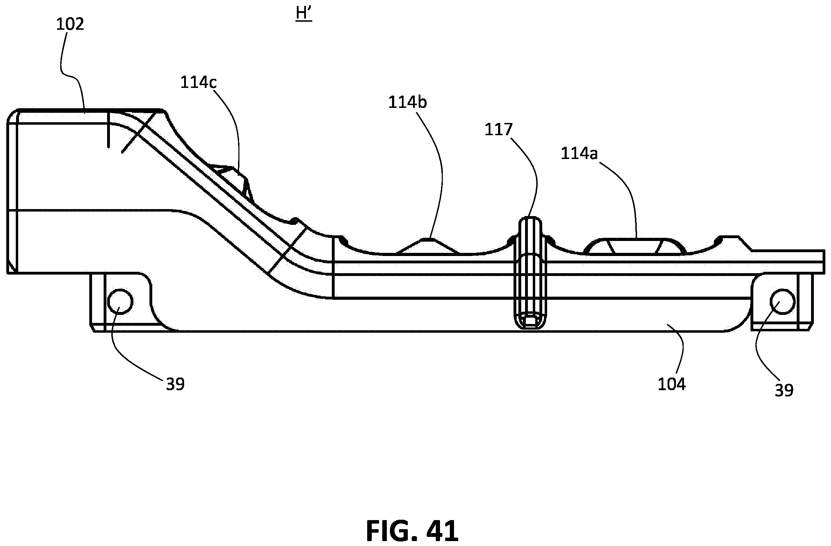

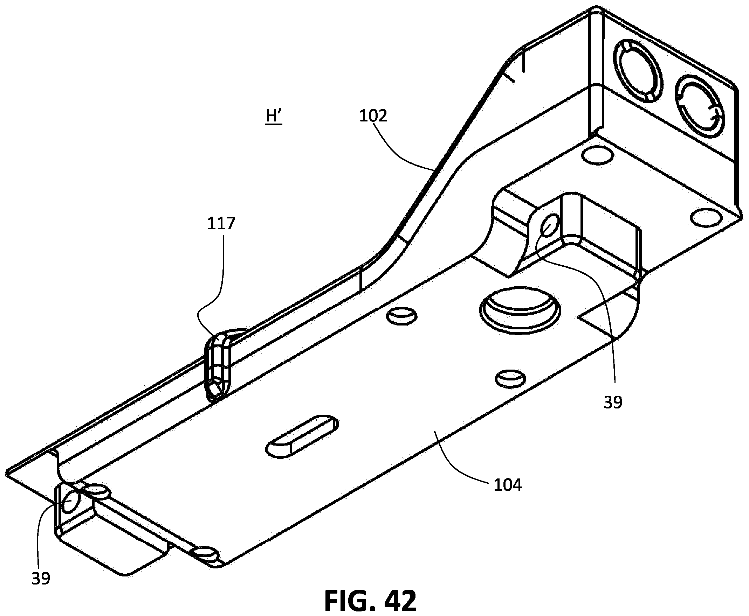

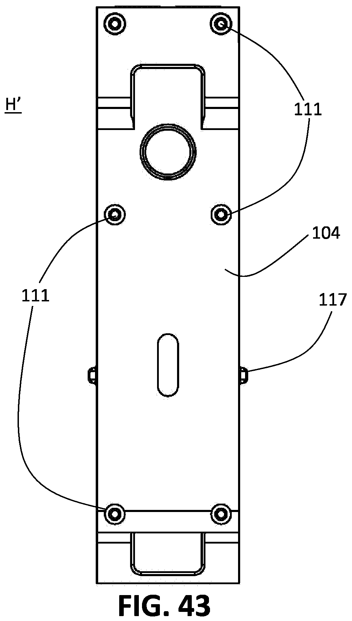

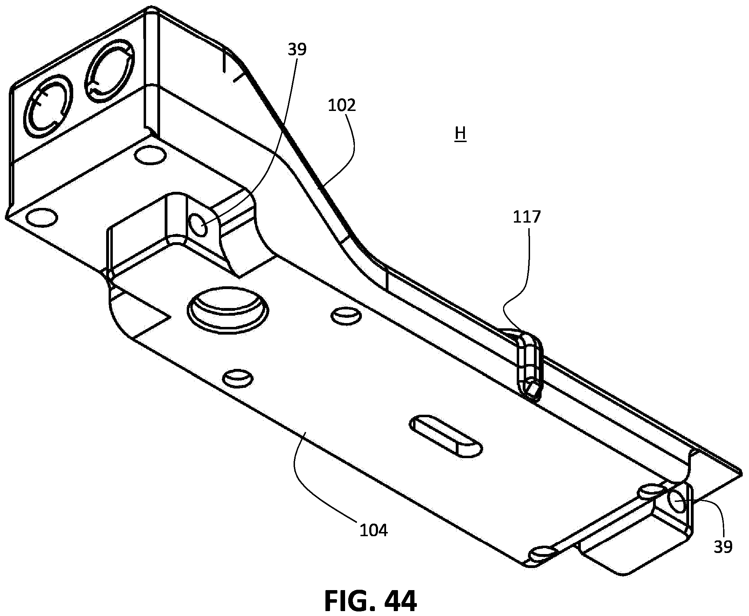

The handguard circuit assembly **80** is electrically coupled to a circuit assembly **82** within the remote keypad assembly **H** (or alternately remote keypad assembly **H'** as shown in FIGS. 36-44). The handguard circuit assembly **80** includes an electrical connector element **84.**

The flashlight assembly **I** includes an electrical interface **55,** which is operably coupled to an electrical interface **57** on the handguard interface assembly **90.** The handguard interface assembly **90** includes a connector assembly **92** configured to detachably couple to the weapon accessory interface. In embodiments, the connector assembly **92** is compatible with a modular attachment system featuring a series of elongated slots along the handguard or accessory mounting surface wherein accessories are attached affixed using locking T-shaped fasteners inserted into the slots and tightened to secure the accessory in place.

In the illustrated embodiment, the connector assembly **92** is a M-LOK(TM) connector configured to detachably couple to a selected one of a plurality of slots **94** in the weapon accessory interface. In embodiments, the slots **94** are compatible with an M-LOK(TM) (Magpul Industries Corp., Austin, TX) compatible mounting interface or similar system. It will be recognized that other types of weapon accessory interfaces are also contemplated.

The connector assembly **92** is coupled to an electrical cable **96** which has an electrical connector **98** disposed at the distal end thereof. In operation, the cable **96** is disposed interiorly of the handguard assembly **B.** The electrical connector **98** is disposed with a complementary notch **100** within the handguard assembly **B** and electrically engages with the connector **84.**

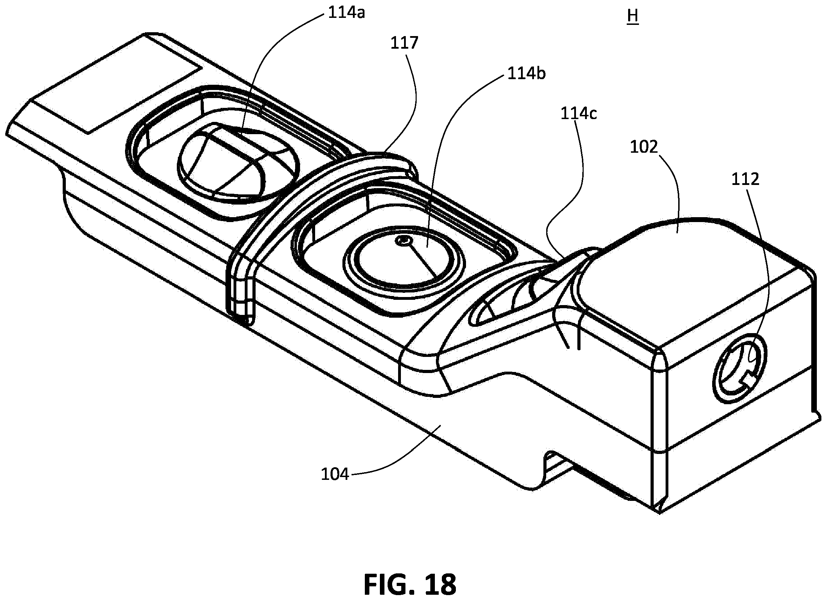

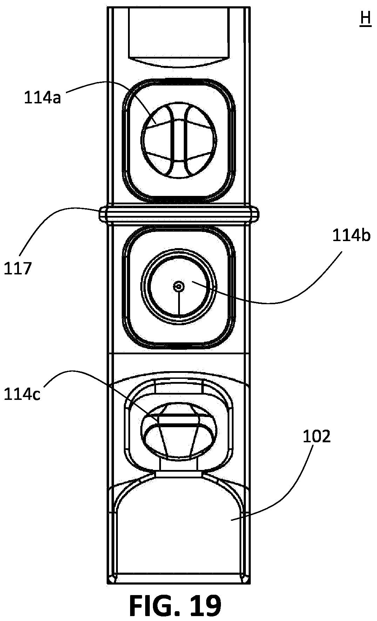

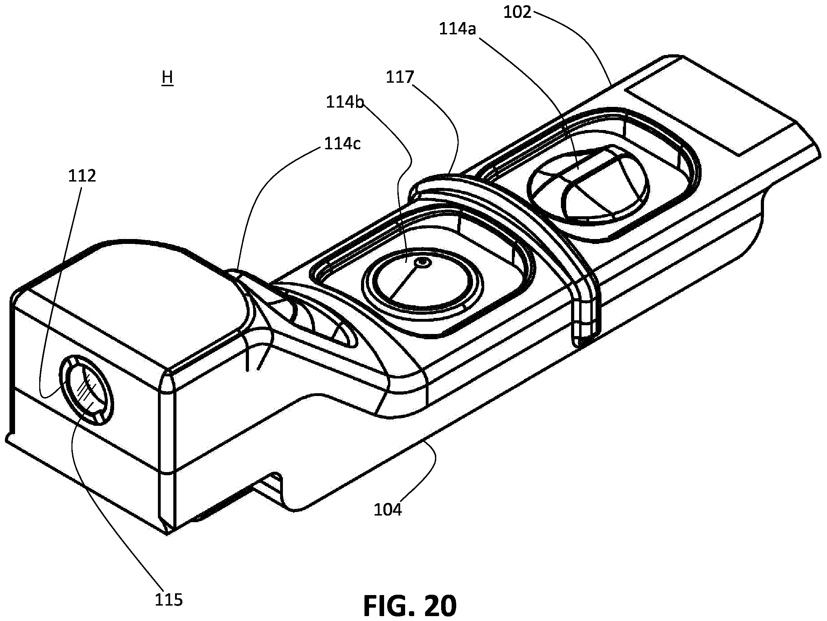

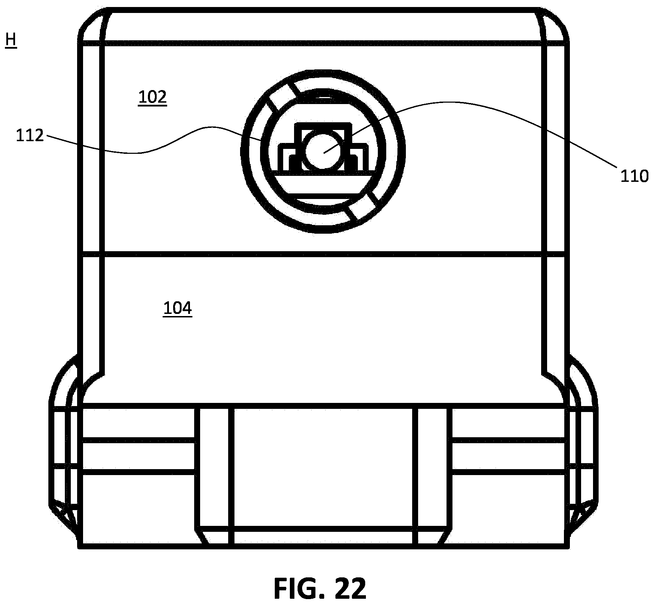

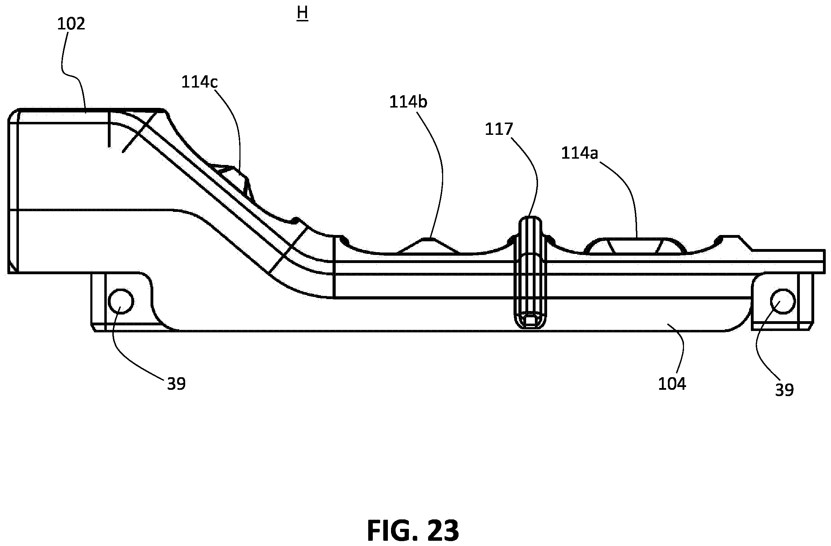

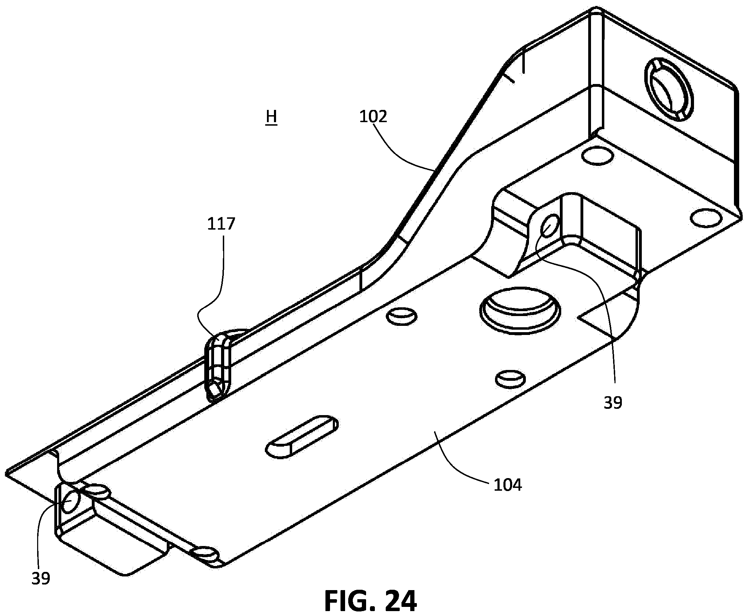

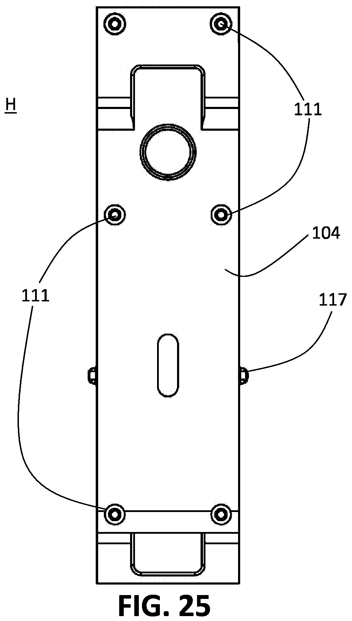

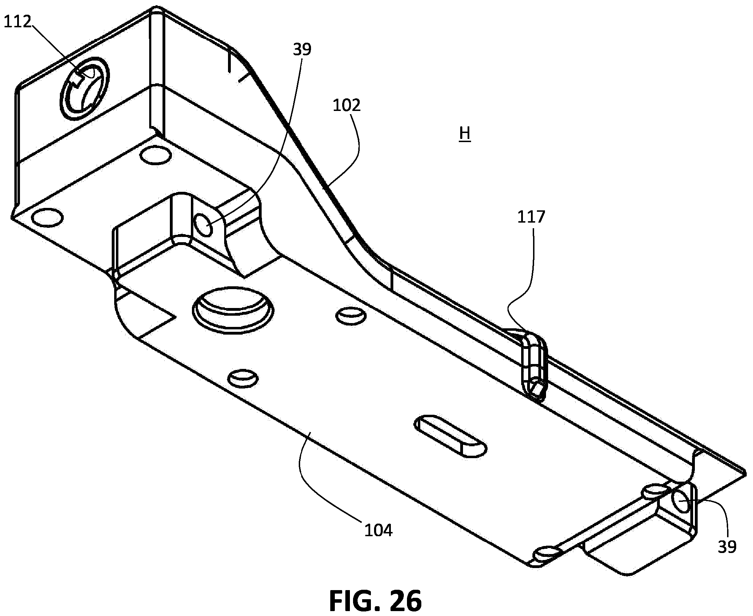

Referring now to FIGS. 18-26 and with continued reference to FIGS. 1-7, 7A, 8-17, and 45, The keypad assembly **H** includes a housing comprising an upper housing shell **102** and a lower housing shell **104.** A keypad circuit assembly **106** is received within an interior compartment **108** within the housing assembly **102, 104.** The keypad circuit assembly **106** is operably and electrically coupled to the handguard circuit assembly **80.** In embodiments, the shells **102, 104** are secured via threaded fasteners (not shown) passing through clearance openings **111** in the shell **104** and threadably engaging aligned complementary openings in the shell **102.**

A light emitting element **110** is disposed on the keypad circuit assembly **106.** The light emitting element **110** may be a light emitting diode (LED), incandescent light source, halogen light source, laser emitter, and so forth. The light emitting element **110** is aligned with a port **112** on the upper shell **102.** In certain embodiments, one or more lenses or other optical elements **115,** such as one or more refractive or diffractive optical element are disposed within the aperture **112** to focus, spread, or otherwise shape the optical output of the light emitting element **110.** In preferred embodiments, the optical output of the light emitting element **110** is in the infrared (IR) range although other wavelengths are contemplated. In preferred embodiments, the light emitting element **110** and associated optics are configured as a wide angle illuminator configured to emit light over a broad area, although embodiments with a more focused or narrower beam angle are also contemplated.

The keypad circuit assembly **106** is operably coupled to a plurality of button or key actuated switches **114a, 114b, 114c.** The keypad assembly **H** and light emitting element **110** are powered by the riser assembly **F.** In operation the light emitting element **110** and switches **114a, 114b, 114c** are configured to be electrically coupled to a selected one of the batteries **32, 36.** The light emitting element **110** can be activated by the keypad buttons or by user interface elements disposed on the fire control system **G** which are coupled to the keypad assembly **H** via the riser assembly **F.** The forward mounting position of the light emitting element **110** on the housing shell **102** allows for minimum interference of the optical beam due to shadowing caused by the barrel of the weapon. The forward mounting position also minimizes reflections off the muzzle of the weapon back into the operator's field of view. In embodiments, the keypad assembly **H** can be moved to multiple positions along the handguard of the weapon to allow for user preference.

In embodiments, the switches **114a, 114b, 114c** are provided with different switch covers having distinctive shapes or features to enable operation without the need for visual confirmation of the button being selected. In embodiments, the button **114a** has a longitudinal ridge, the button **114b** has a dome or smooth shape, and the button **114c** has a transverse ridge. Other shapes or configurations are also contemplated. Allowing the operator to identify the desired button tactically enhances operational efficiency, minimizes the risk of errors, allows for button identification in low light conditions and in high stakes situations where the need to visualize the buttons could sacrifice situational awareness. In embodiments, a raised rib, ridge, or similar divider **117** is disposed between the buttons **114a, 114b** and the button **114c** is disposed on an angled or inclined portion of the housing to differentiate it from the other buttons, to allow the operator to activate the desired button without inadvertently pressing the wrong button or multiple buttons simultaneously.

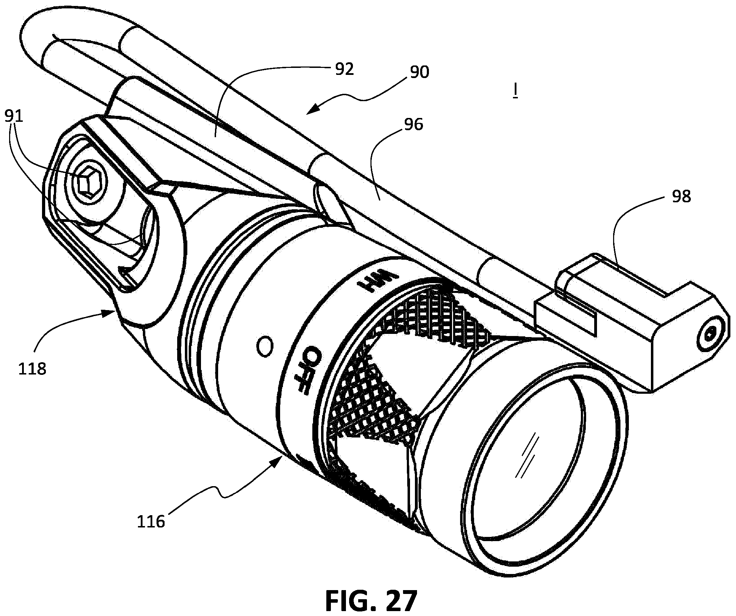

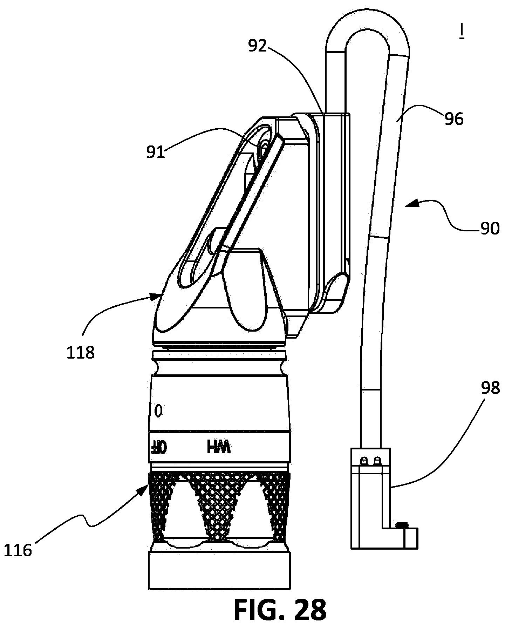

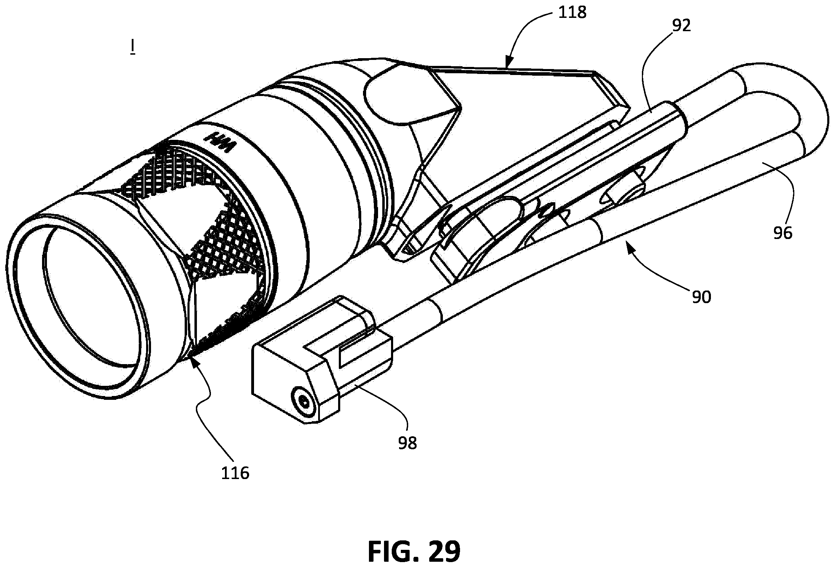

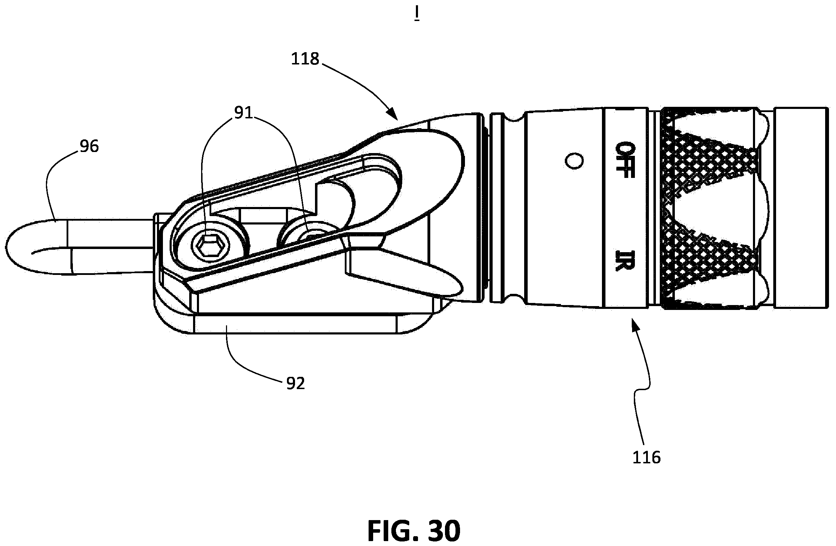

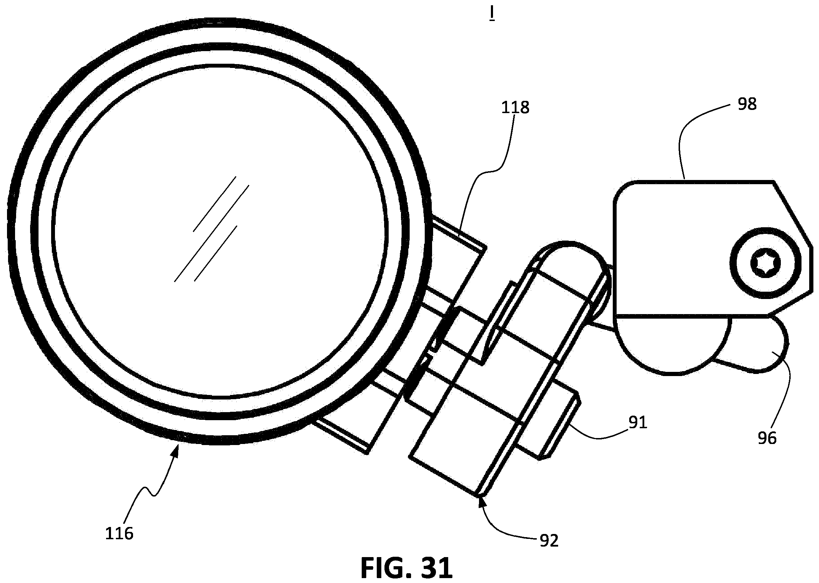

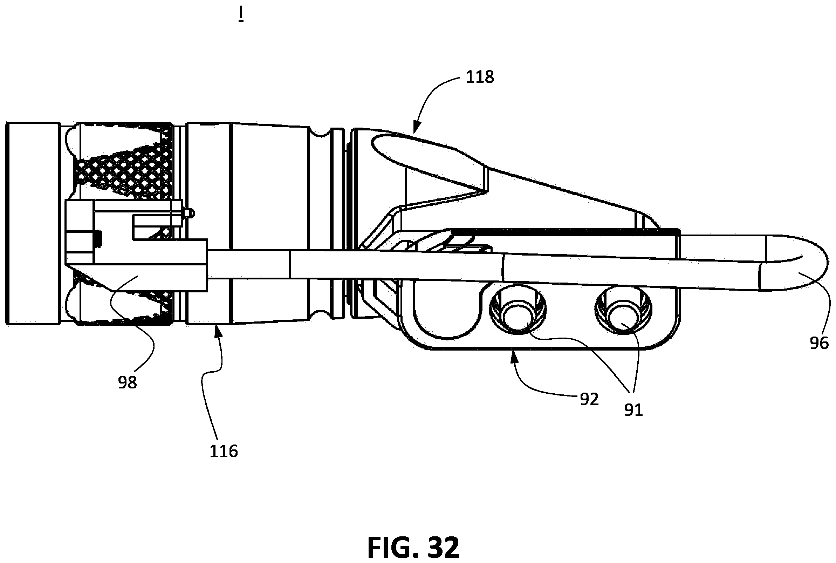

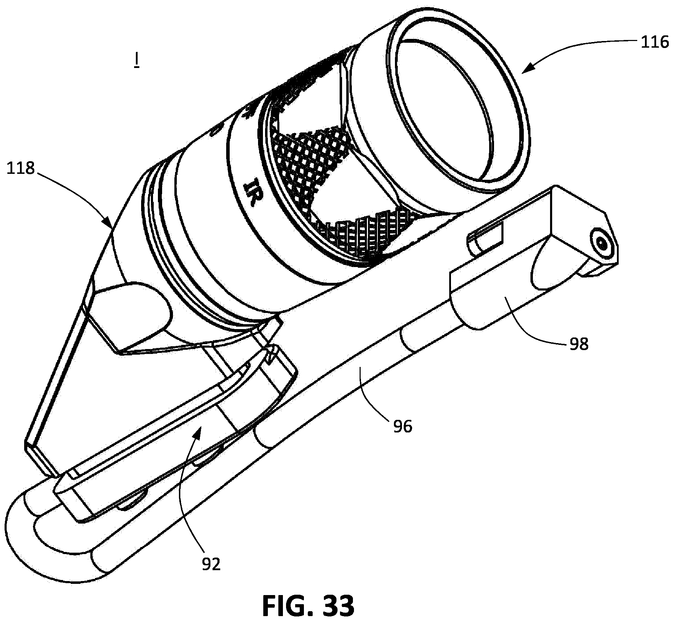

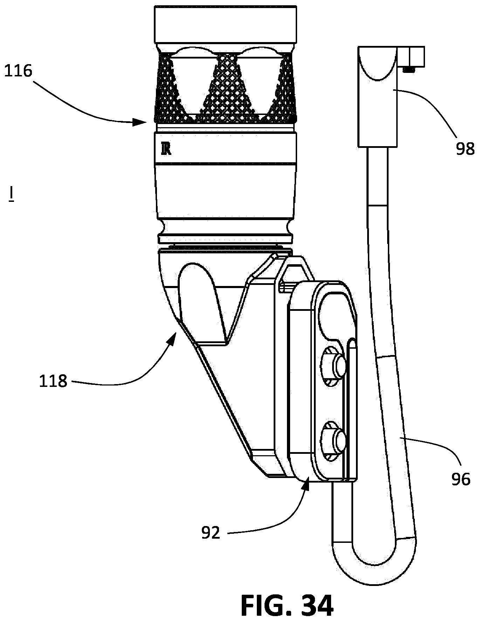

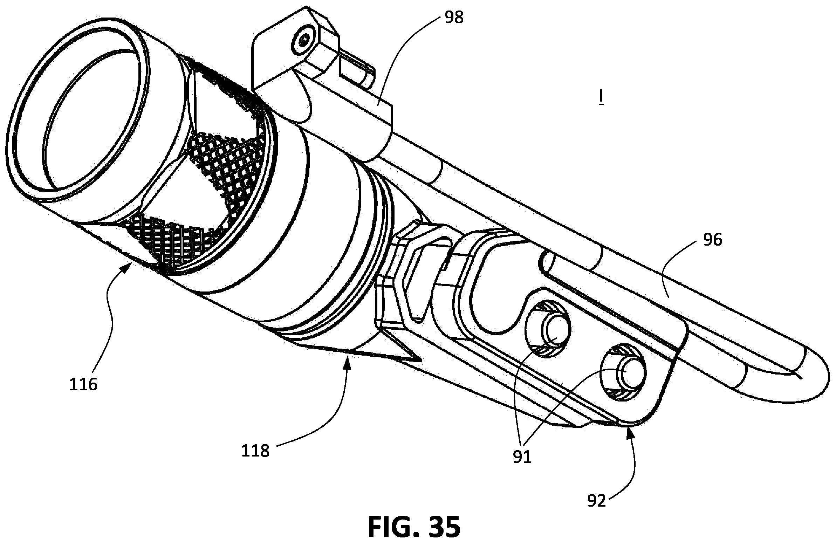

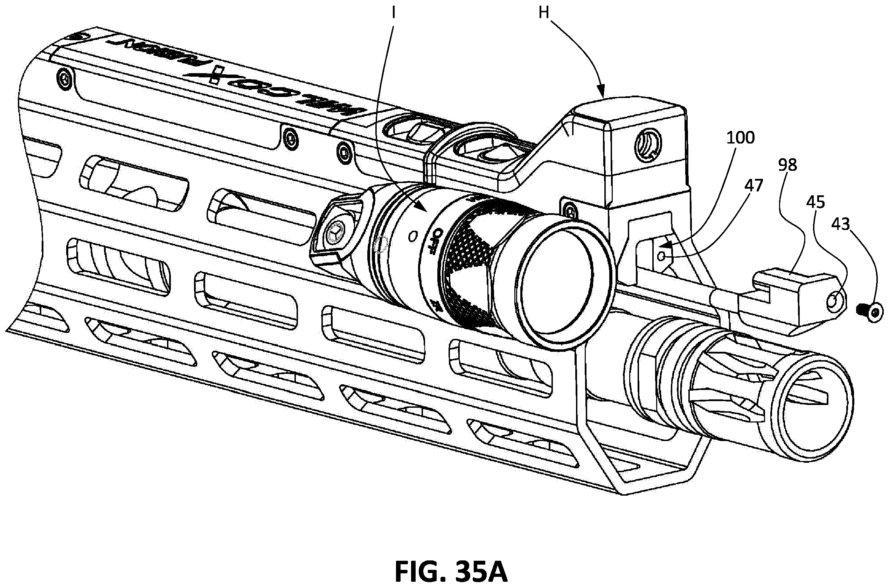

Referring now to FIGS. 27-35 and 35A-35C, and with continued reference to FIGS. 1-7, 7A, 8-26 and 45, The flashlight assembly **I** includes a flashlight head portion **116** and a body portion **118.** In embodiments, the flashlight head **116** includes a light source, such as one or more LEDs or other light emitting elements, such as incandescent, halogen, or laser light sources, a reflector, lens, and bezel, as would be understood by persons skilled in the art. The flashlight assembly **I** is configured to plug into a common point **100** on the handguard assembly **B** via the plug **98,** and is powered by the power sources **32, 36** within the riser assembly **F.** In embodiments, the flashlight assembly **I** does not contain a battery. This allows the flashlight assembly **I** to be as compact as possible. As best seen in FIG. 35A, the plug **98** is received with the receptacle **100.** A threaded fastener **43** passes through a clearance opening **45** in the plug **98,** and threadably engages an aligned opening **47** within the connector receptacle **100.**

The flashlight body **118** is coupled to the connector assembly **92** attachable to the handguard interface assembly **90** via threaded fasteners **91.** The connector assembly is advantageously an M-LOK compatible connector. In FIG. 17, the handguard interface assembly **90** is shown exterior of the handguard assembly **B** for ease of illustration, although it will be recognized that in operation the connector assembly **92** is disposed within the handguard assembly **B** with electrical connector elements accessible though the slot **94** to which It is attached. The cable **96** is preferably relatively short and flexible, with sufficient length to allow the flashlight assembly **I** to be positioned at any point on the perimeter of the handguard assembly **B.** In this manner, the power routing to the flashlight assembly **I** is done completely inside the handguard assembly **B** with no exposed cables.

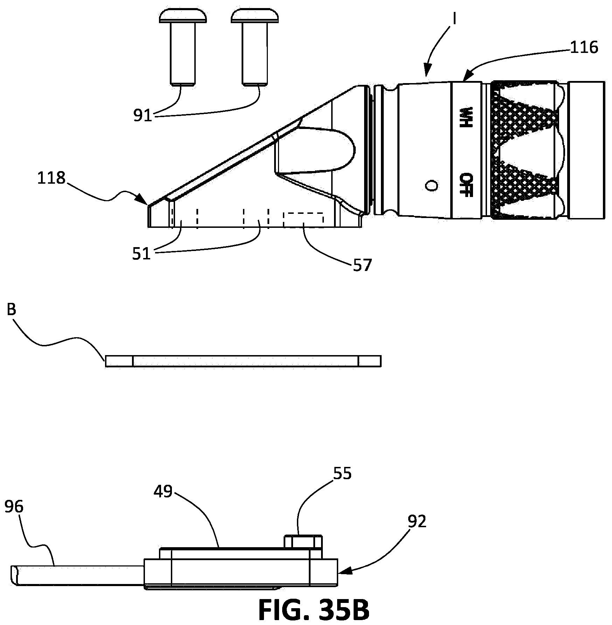

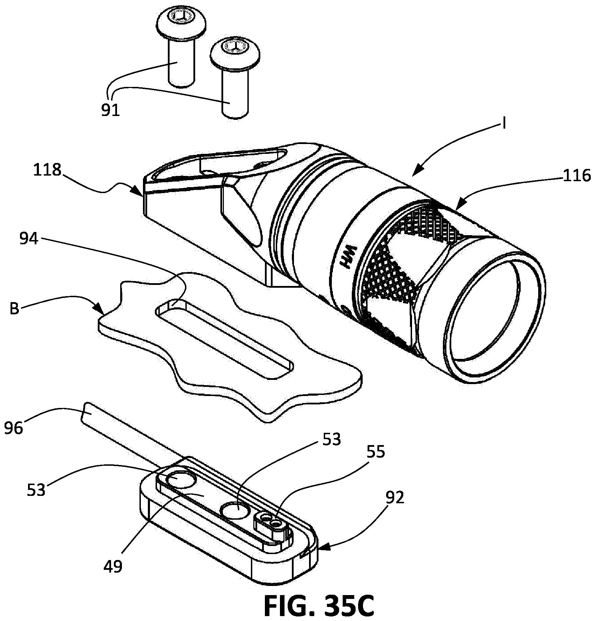

As best seen in FIGS. 35B and 35C, for ease of illustration, there is shown a fragmentary portion of the handguard assembly **B** including a mounting slot **94.** The connector assembly **92** is disposed within the interior of the handguard assembly **B** and includes an upstanding boss **49** which is received within and is complementary in shape with the slot **94.** The threaded fasteners **91** pass through aligned clearance openings **51** in the flashlight body **118** and through the slot **94** and threadably engage openings **53** in the connector assembly **92.** The fasteners **91** provide a clamping force between the flashlight assembly **I** and the connector assembly **92** to secure the flashlight assembly **I** to the handguard assembly **B.** The electrical connector **55** is disposed on the boss **49** and engages the complementary connector **57** on the flashlight body **118** for electrically coupling the flashlight assembly **I** to the riser assembly **F** via the handguard circuit assembly **80/**

Referring now to FIGS. 36-44, and with continued referenced to FIGS. 1-7, 7A, 8-35, 35A-35C, and 45, there is shown an alternative embodiment keypad assembly **H'** which is as described above by way of reference to FIGS. 18-26, except that the keypad assembly **H'** additionally houses a camera assembly **120** (see FIG. 45) for imaging a scene within the field of view of the camera assembly **120.** The camera assembly **120** includes a lens assembly to capture video footage and a sensor array (e.g., a charge-coupled device (CCD) array or a complementary metal-oxide-semiconductor (CMOS) array) for converting incoming light into electrical signals and a processing unit for storing digital representations of an images scene as would be understood by persons skilled in the art. The camera assembly may be configured to record and/or transmit still images, video images, or both. In situations where additional illumination is required to enhance visibility or highlight specific details within the imaged scene, the integrated light emitting element **110** can be activated. The light emitting element **110** and camera assembly **120** are powered by the batteries **32 36.**

The keypad assembly **H'** includes a housing comprising an upper housing shell **102** and a lower housing shell **104.** A keypad circuit assembly **106** is received within an interior compartment **108** within the housing assembly **102, 104.** The keypad circuit assembly **106** is operably and electrically coupled to the handguard circuit assembly **80.** In embodiments, the shells **102, 104** are secured via threaded fasteners (not shown) passing through clearance openings **111** in the shell **104** and threadably engaging aligned complementary openings in the shell **102.**

A light emitting element **110** is disposed on the keypad circuit assembly **106.** The light emitting element **110** may be a light emitting diode (LED), incandescent light source, halogen light source, laser emitter, and so forth. The light emitting element **110** is aligned with a port **112** on the upper shell **102.** In certain embodiments, one or more lenses or other optical elements **115,** such as one or more refractive, diffractive, or protective optical elements are disposed within the aperture to focus, spread, or otherwise shape the optical output of the light emitting element **110.** In preferred embodiments, the optical output of the light emitting element **110** is in the infrared (IR) range although other wavelengths are contemplated. In preferred embodiments, the light emitting element **110** and associated optics are configured as a wide angle illuminator configured to emit light over a broad area, although embodiments with a more focused or narrower beam angle are also contemplated.

The camera assembly **120** is coupled to the keypad circuit assembly **106.** The camera assembly **120** is advantageously a digital camera and may be a daytime camera, low light camera, infrared camera, thermal camera, etc., and may be a still image camera or video camera. The camera assembly **120** is aligned with a port **122** on the upper shell **102.** In certain embodiments, one or more lenses or other optical elements **125,** such as one or more refractive, diffractive, or protective optical elements are disposed within the aperture **122** to focus rays from a scene being imaged.

The keypad circuit assembly **106** is operably coupled to a plurality of button or key actuated switches **114a, 114b, 114c.** The keypad assembly **H'** light emitting element **110,** and camera assembly **120** are powered by the riser assembly **F.** In operation the light emitting element **110** and switches **114a, 114b, 114c** are configured to be electrically coupled to a selected one of the batteries **32, 36.** The light emitting element **110** and camera assembly **120** can be activated by the keypad buttons or by user interface elements disposed on the fire control system **G** which are coupled to the keypad assembly **H** via the riser assembly **F.** The forward mounting position of the light emitting element **110** on the housing shell **102** allows for minimum interference of the optical beam due to shadowing caused by the barrel of the weapon. The forward mounting position also minimizes reflections off the muzzle of the weapon back into the operator's field of view. In embodiments, the keypad assembly **H** can be moved to multiple positions along the handguard of the weapon to allow for user preference.

In embodiments, the switches **114a, 114b, 114c** are provided with different switch covers having distinctive shapes or features to enable operation without the need for visual confirmation of the button being selected. In embodiments, the button **114a** has a longitudinal ridge, the button **114b** has a dome or smooth shape, and the button **114c** has a transverse ridge. Other shapes or configurations are also contemplated. Allowing the operator to identify the desired button tactically enhances operational efficiency, minimizes the risk of errors, allows for button identification in low light conditions and in high stakes situations where the need to visualize the buttons could sacrifice situational awareness. In embodiments, a ridge or similar divider **117** is disposed between the buttons **114a, 114b** and the button **114c** is disposed on an angled or inclined portion of the housing to differentiate it from the other buttons, to allow the operator to activate the desired button without inadvertently pressing the wrong button or multiple buttons simultaneously.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A riser mount system, comprising:
a housing having a lower surface configured to engage a weapon accessory interface; an upper surface opposite the lower surface configured to engage a fire control system; and a peripheral wall extending between the lower surface and the upper surface, the housing defining an interior compartment;
a riser circuit assembly disposed with the interior compartment, the interior compartment configured to receive one or more batteries for electrical coupling to the riser circuit assembly;
a first electrical connector disposed on the first surface and structured and operable to electrically couple the one or more batteries to a fire control system;
a second electrical connector disposed on the second surface and structured and operable to electrically couple the one or more batteries to one or more devices on the weapon accessory interface.

2. The riser mount system of claim 1, in combination with the weapon accessory interface, wherein the weapon accessory interface includes a handguard assembly having a handguard circuit assembly in electrical communication with the riser circuit assembly.

3. The riser mount system of claim 2, wherein handguard assembly includes a plurality of elongated slots.

4. The riser mount system of claim 2 or claim 3, further comprising a keypad assembly electrically coupled to the handguard assembly, the keypad assembly having one or more buttons configured to control operation of the fire control system.

5. The riser mount system of claim 4, wherein the keypad assembly comprises a housing having an integral illuminator disposed within the housing.

6. The riser mount system of claim 5, wherein the housing has a forward facing surface and the integral illuminator is configured to emit light through an aperture in the forward facing surface.

7. The riser mount system of any of claims 4-6, wherein the keypad assembly comprises an integral camera assembly disposed within the housing.

8. The riser mount system of claim 7, wherein the housing has a forward facing surface and the integral camera is configured to image light rays entering through an aperture in the forward facing surface.

9. The riser mount system of any of claims 4-7, wherein the keypad assembly comprises a housing having an integral illuminator and an integral camera system disposed within the housing.

10. The riser mount system of any of claims 4-9, in combination with the fire control system.

11. The riser mount system of any of claims 2-10, wherein the handguard assembly includes first and second fastening locations for securing the keypad assembly to the handguard assembly, wherein each of the first and second fastening locations is disposed at a different axial position on the handguard assembly.

12. The riser mount system of claim 11, further comprising a cover plate which is configured to be detachably coupled to a selected one of the first and second fastening locations.

13. The riser mount system of any of claims 2-12, wherein the handguard assembly is disposed on an upper surface of the handguard assembly.

14. The riser mount system of any of the preceding claims, in combination with the fire control system.

15. The riser mount system of claim 14, wherein the fire control system is a laser sight.

16. The riser mount system of any of claims 1-15, further comprising a flashlight assembly configured for detachable coupling to the weapon accessory interface and electrical coupling to the one or more batteries.

17. The riser mount system of claim 16, wherein the flashlight assembly comprises:
a flashlight head having one or more light emitting diodes; and
a flashlight body coupled to the flashlight head.

18. The riser mount system of claim 17, wherein the flashlight assembly does not contain batteries to power the flashlight head.

19. The riser mount system of claim 17 or claim 18, further comprising a flashlight connector assembly, wherein the flashlight connector assembly is configured to detachably couple to the weapon accessory interface at a plurality of positions on the weapon accessory interface.

20. The riser mount system of any of the preceding claims, further comprising:
a first battery tube disposed within the interior compartment and configured to receive a first battery;
a second battery tube disposed within the interior compartment and configured to receive a second battery; and
a switch disposed on the housing and configured to selectively electrically couple the first battery and the second battery to the riser circuit assembly and to selectively electrically decouple the first battery and the second battery from the riser circuit assembly.

21. The riser mount system of claim 20, further comprising:
the first battery tube includes a first open end extending through a first opening in the peripheral wall, the first open end being closed by a first removable cover; and
the second battery tube includes a second open end extending through an opening in the peripheral wall, the second open end being closed by a second removable cover.
